# EUROPEAN PATENT APPLICATION

(11) **EP 1 041 058 A2**
(43) Date of publication of application: **04.10.2000**
(21) Application number: 00500047.6
(22) Date of filing: 27.03.2000
(51) Int. Cl.: C05F 3/00

(54) **Improved procedure for treatment of pig manure and fertiliser product thereby obtained**

(30) Priority: 27.03.1999 ES 9900623
(71) Applicant: Ros Roca, S.A., 25300 Tarrega (Lleida) (ES)
(72) Inventor: Sunyer Martin, Ramon, 08720 Vilafranca del Penedés, Barcelona (ES)
(74) Representative: Primo de Rivera y Urquijo, Jose Antonio

(57) **Abstract**

The present invention relates to improvements to a biological procedure for the treatment of pig manure, in which a much better degradation of liquid residues with a high contaminating load and/or high toxicity is achieved, especially in reference to the elimination of ammonium nitrogen and total Kjeldahl nitrogen (TKN) present in the pig manure. The invention also relates to a new product resulting from the treatment process, of use in the agricultural sector as fertiliser.

## Description

### OBJECT OF THE INVENTION

The present invention relates to improvements to a biological procedure for the treatment of pig manure, in which a much better degradation of liquid residues with a high contaminating load and/or high toxicity, especially in reference to the elimination of ammonium nitrogen and total Kjeldahl nitrogen (TKN) present in the pig manure. The invention also relates to a new product resulting from the treatment process, of use in the agricultural sector as fertiliser.

### BACKGROUND OF THE INVENTION

The present patent relates to improvements to a biological procedure for the degradation of liquid residues, in particular pig manure. Said biological procedure is the object of the patents P9800763 and WO 97/47561 by the same applicant as the present application. In said patents a procedure is disclosed comprising distinct stages: an initial physical-chemical treatment, an anaerobic-aerobic mixed biological treatment, with different processes, and finally a conventional physical-chemical treatment.

The improved procedure of the present patent is based on a chemical reaction, known for its harmful nature in water piping, but which has never been applied to the treatment of pig manure. The reaction allows elimination of ammonium nitrogen and the total Kjeldahl nitrogen, thus tackling the problem of nitrogen removal in the treatment process.

Furthermore, another improvement with respect to the aforementioned patents, and with respect to the State of the Art, consists of obtaining a novel final product at the end of the procedure, rich in humic and fulvic acid, which may be used as liquid fertiliser. In the State of the Art, the humic and fulvic acid added to fertiliser are obtained by the extraction from organic material, which may be either compost or peat. In the novel procedure herein disclosed, treated pig manure is used as the source of these compounds for the production of a fertiliser for agricultural use.

### SUMMARY OF THE INVENTION

To combine the application of the novel chemical reaction described above with the production of the novel fertiliser rich in humic and fulvic acid the following improvement in the treatment procedure has been developed.

To apply the procedure, prior to the application of the first improvement the virgin pig manure should be submitted to a sterilisation process the reactor. In this sterilisation process the mass of manure is heated, either within the reactor itself or into a smaller reactor prior to centrifugation. This prior sterilisation process or digestion process allows the total Kjeldahl nitrogen to be converted into the form of ammonium nitrogen.

The first improvement in the procedure consists of eliminating the nitrogen content, now in ammonium nitrogen form, from the sterilised mass, by chemical precipitation, more specifically using the reaction to form "struvite" (magnesium ammonium phosphate), a reaction which allows almost all ammonia to be eliminated from the pig manure.

The reaction is effected by introducing specific reagents, namely magnesium and phosphate salts, into a strongly stirred reactor containing the sterilised pig manure at 70° C. Under these conditions the "struvite" (magnesium ammonium phosphate) formed precipitates out. The "struvite" reaction proceeds spontaneously, but as the molar quantities of reagent are not exactly balanced the reaction is partial. After the reaction has reached completion, a flocculating agent is added and the precipitated salts and solid and liquid fractions of the sterilised manure separated by centrifugation. The solid fraction, rich in nitrogen and phosphorus containing compounds is then discarded. This process leads to almost complete elimination of total Kjeldahl nitrogen (TKN).

The remaining liquid is then subsequently passed on for further treatment in a biological reactor (see patents P9800763 and WO 97/47561) to obtain a product consisting of water and nutrients. According to the prior art the semi-treated residual water is then released directly into the environment, although the semi-treated water may be harmful for the environment. The complete elimination of non-biodegradable compounds from a product is obligatory before it is released into the environment.

In the procedure of the present invention the semi-treated product is submitted to a further novel procedure in order to obtain a novel product which can be used for agricultural purposes. The procedure consists of heating the semi-treated liquid to effect partial evaporation thereof. After which a process of coagulation in the concentrate is induced by the addition of metallic salts and adjusting the pH to acidic values. The solid and liquid fractions are separated and the liquid fraction adjusted to a basic pH by the addition of a metal hydroxide salt, for example CaOH. The liquid is then passed through a membrane with a 5000-Dalton cut-off, which does not permit the passage of humic and fulvic acid. The resulting liquid concentrate is rich in humic and fulvic acid and is mixed with the solid precipitate from the earlier stage. The mixture is then adjusted to alkaline pH's to give the final product, which can be used in the agricultural sector as a fertiliser. The liquid that passes through the membrane can be released directly into the environment.

### DESCRIPTION OF THE FIGURES

To facilitate a better understanding of the ideas expressed above, the elements of the invention are described with reference to the illustrative figure accompanying this specification. The figure is purely for illustrative purposes and is non-limiting.

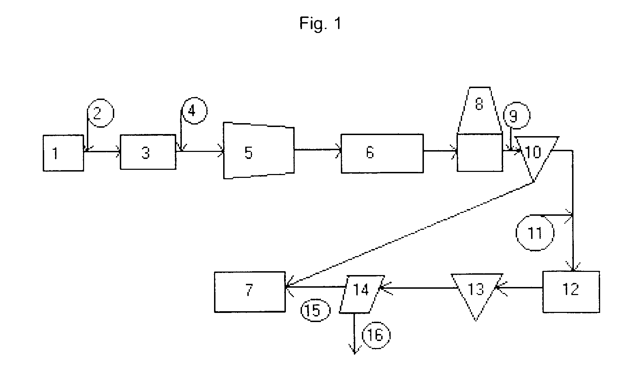

Figure 1 shows a schematic block diagram representing an embodiment of the invention according to the procedure of the present invention.

### DESCRIPTION OF A PREFERRED EMBODIMENT OF THE INVENTION

The process consists of treating liquid pig manure with the object of purifying it in order to reduce its contaminating effects and to obtain novel products. The untreated pig manure is subjecting to an initial cleansing process in which the manure is heated to 70° C. During this homogenisation process (1) the Kjeldahl nitrogen content is converted to ammonium nitrogen. The pig manure then passes to a strongly stirred reactor (2) where magnesium and phosphorus salts are added. It then passes to a chamber (3) where the reaction to form "struvite" takes place spontaneously, leading to the elimination of 98% of the ammonium nitrogen in the mixture (virtually all the Kjeldahl nitrogen compounds in the initial untreated manure have been converted to the ammonium form during the cleansing process (1), thus effecting the almost complete elimination of nitrogen from the manure). After 15 minutes in the reaction chamber (3) a suitable organic flocculating agent is added (4) and the mixture submitted to centrifugation (5) to produce a solid and liquid fraction. The solid fraction, rich in nitrogen and phosphorus compounds, is composed of the precipitated "struvite" and the remaining solid material. This solid fraction is discarded. The liquid fraction, lean in nitrogen and phosphorus compounds, is introduced into a biological reactor (6) where the biological purification process of the liquid part of the pig manure will continue.

Once the soluble fraction of the pig manure has passed through the biological reactor (6) semi-purified water is obtained containing nutrients, mainly humic and fulvic acids. The semi-purified water is now heated (the heat source preferably being derived from a co-generation process, for example, a process which simultaneously produces heat and electricity) to concentrate it by means of partial evaporation (8). The next step is a coagulation process whereby metallic salts and acids are added (9) to adjust the semi-purified water to an acidic pH, lying between 1 and 6. The precipitated fraction is separated by decantation (10). The remaining liquid fraction or supernatant is adjusted to a basic pH of between 7 and 12 by addition of CaOH (11) in a suitable reactor (12) before a further decantation step (13) and filtration through a Dalton membrane with a 5000 Dalton cut-off (14) to give a concentrated fraction and a liquid that may be released directly to the environment (15). The concentrated fraction is combined with the solid fraction from the previous precipitation step (10) and the pH of the resulting mixture adjusted to a basic pH (greater than 7). The resulting mixture (7) is rich in humic and fulvic acid and may be used as a liquid fertiliser by the agricultural sector.

The procedure of the invention presents considerable advantages. The use of co-generation to produce the heat necessary for the evaporation step (8) reduces the energy costs of the process. There is a reduction in the quantity of contaminants produced by the process, allowing direct release into the environment and the liquid fertiliser is a novel product which has never before been attained from a manure treatment process.

## Claims

1. An improvement to a procedure for treatment of pig manure, said procedure pertaining to physical and chemical treatment of said pig manure followed by a biological treatment, characterised in that it comprises the additional steps of;
i) sterilisation (1) of the pig manure in its virgin state by heating said mass, converting the total Kjeldahl nitrogen into ammonium nitrogen passing said sterilised mass to a vigorously stirred reactor (2); and
ii) adding magnesium and phosphate salts (3) to induce rapid chemical precipitation of the ammonium nitrogen present in the sterilised pig manure through the chemical precipitation of magnesium ammonium phosphate ("struvite") and, after the addition of a suitable organic flocculant (4), centrifuging the resulting mixture (5) to separate the "struvite" and other solid material from the liquid fraction.

2. A procedure according to claim 1, characterised because said liquid fraction is submitted to further treatment comprising; treating said liquid fraction in a biological reactor (6), partially evaporating the liquid (8) from said biological treatment, adding acid and metal salts (9) to induce precipitation, separating the precipitate from the liquid fraction (10), adding a metal hydroxide (11) to bring the pH of said liquid fraction to a basic pH, passing said liquid fraction through a membrane with a 5000 Dalton cut-off (14) to produce a concentrate, mixing said concentrate with said precipitate (10), and adjusting the pH of the mixture to alkaline values to yield a high quality novel liquid fertiliser (7) of use in the agricultural sector.

3. A liquid fertiliser obtained according to the previous claims, rich in fulvic and humic acid.
